# EUROPEAN PATENT APPLICATION

(11) **EP 3 017 688 A1**
(43) Date of publication of application: **11.05.2016**
(21) Application number: 15386028.3
(22) Date of filing: 05.11.2015
(51) Int. Cl.: A01G 9/14, A01G 13/00

(54) **DOUBLE PLASTIC FILM FOR COVERING AGRICULTURAL CROPS**

(30) Priority: 07.11.2014 GR 20140100565
(71) Applicant: Daios, Asterios D., 592 00 Naousa (GR)
(72) Inventor: Daios, Asterios D., 592 00 Naousa (GR)
(74) Representative: Argyriadis, Korinna

(57) **Abstract**

The invention refers to a specialised plastic film for covering agricultural crops, the purpose of which is to facilitate ventilation of the covered area and, through ventilation, to assist in the reduction of the internal temperature when it exceeds the limits, and also to facilitate the release of moisture from the covered area without allowing for the inflow of rainwater, and to allow for the renewal of the air in the covered area. It consists of two plastic films, the top (2) and bottom (3) film, which are joined by repeated adhesions (6a and 6b) along their length, preferably linear adhesions, and have recurring ventilation holes positioned in such a way that none of the holes (4) in the top plastic film (2) coincide fully or partially with any of the holes (5) in the bottom plastic film (3): Each hole or transverse row of holes in the one film is positioned between two holes or transverse rows of holes in the other film.

## Description

This invention refers to a specialised plastic film that can be used on greenhouses and on low tunnels used to cover agricultural crops. In addition to its basic properties, the purpose of the plastic film is to facilitate ventilation of the covered area and, through ventilation, to assist in the reduction of the internal temperature when it exceeds the limits, and also to facilitate the release of moisture from the covered area without allowing for the inflow of rainwater, and to allow for the renewal of the air in the covered area.

In recent decades, there has been a significant growth in the use of plastic films on agricultural crops in order to protect production against weather conditions, to regulate the earliness of production, and to modify certain basic characteristics of production.

The coverage of agricultural crops with plastic films can be divided into three main categories:
1. High tunnels or greenhouses. These are structures covered with plastic films, which are usually over 4 metres wide, and are usually equipped with manual or automatic systems along the length of structure or at the two ends of the structure, which serve to open the plastic films or sections thereof in order to ventilate the covered area. These plastic films are usually used for multiple seasons and have a thickness of over 100 µm.
2. Low tunnels. These are structures usually covered with plastic films less than 4 metres wide. In these structures, the lengthwise edges of the plastic film are secured with soil, and therefore there are no openings for ventilation. These plastic films are usually used for one year and have a thickness of less than 100 µm, mainly ranging from 15 to 50 µm
3. Rainproof structures. The plastic films used on these structures are usually used for multiple seasons and are up to 6 metres wide. They cover crops for a few months a year - during the ripening season - and are subsequently collected or gathered on top of the structure (usually based on the palmetta system) so that they can be used in the same way in the following cultivation seasons.

The internal conditions of crops covered with plastic films change in relation to the environment.

So, the temperature, humidity and air quality are usually different to those of the environment, the aim being to achieve the most suitable conditions for the proper growth of the plants.

Proper ventilation is a necessary requirement for the proper functioning of a plastic film covering system.

Insufficient ventilation or the lack of ventilation causes excessive humidity in the air of the covered space, thus creating the ideal conditions for the development of diseases, such as botrytis, resulting in the infection of the crops.

Insufficient ventilation or the lack of ventilation can facilitate the development of high temperatures in the covered space, which shock the plants and slow down their growth, while they often have detrimental effects on them.

Lastly, insufficient ventilation or the lack of ventilation also affects the quality and composition of the air (excessive oxygen or carbon dioxide) and can, as a result, slow down the growth of the plants.

Therefore, solutions have been found involving the use of plastic films that allow for at least a basic ventilation of the covered space.

These are usually perforated plastic films, the dominant trend being the manufacture of films with 250 holes of 10-20 mm per m², which allow for at least, the basic ventilation of the covered space through these holes.

To date, solutions involving the use of such plastic films offer the same degree of ventilation to the covered spaces, whether the environment is cold or hot, due to the fact that their openings are fixed and therefore there is also unwanted heat loss.

Furthermore, they allow for the inflow of rainwater, which results in an increase in the humidity in the covered space and causes problems to the plants.

Under Patent GR 1004440, we proposed a plastic film with covered ventilation holes, which has offered a solution to the problem and is suitable for several applications, such as rainproof plastic films.

This proposal suggests the opening of holes in a plastic film used to cover crops for the purpose of facilitating ventilation of the covered space.

These holes are covered by a plastic coating film, which is attached to the basic plastic film in order to prevent the flow of rainwater into the covered space when in use.

The plastic coating film can either consist of small pieces attached to the basic film or an entire strip of plastic film along its length.

Due to the fact that the plastic coating film does not have holes that can facilitate the escape of air passing through the holes of the basic plastic film into the environment, its longitudinal dimension is slightly larger than the corresponding dimension of the basic film.

Thus, if the length of the basic film is Lb and the length of the plastic coating film is La, then La>Lb must always apply so that the air can flow into the environment through the gap formed by the different lengths of the corresponding sections of the two plastic films.

This invention constitutes a different approach to this problem and comes to cover the gap in plastic films providing ventilation. The objective is for the plastic film to allow for satisfactory ventilation of the covered space, however it must be self-regulating.

This means that when the temperature is high in the covered space, the path of ventilation expands, thus changing (increasing) the quantity of outgoing (or incoming) air.

The opposite occurs when the temperature of the covered space is low, in which case the path of outgoing air becomes shorter, thus reducing the quantity of outgoing or incoming air and, by extension, heat loss.

Simultaneously, the plastic film in this invention protects the covered space against the inflow of rainwater, which could contribute to the increase of humidity.

This can be achieved by manufacturing a plastic film (1) where one section (preferably along its length) or even the entire plastic film consists of a double film. Thus, the plastic film (1) basically consists of two plastic films:
The top plastic film (2) and the bottom plastic film (3), which are joined by repeated adhesions (6a, 6b) along their length, in any form, but preferably linear adhesions.

The adhesions (6a, 6b) also demarcate the connection of the top plastic film (2) to the bottom plastic film (3) and the relevant positions of the holes (4-5) on both films.

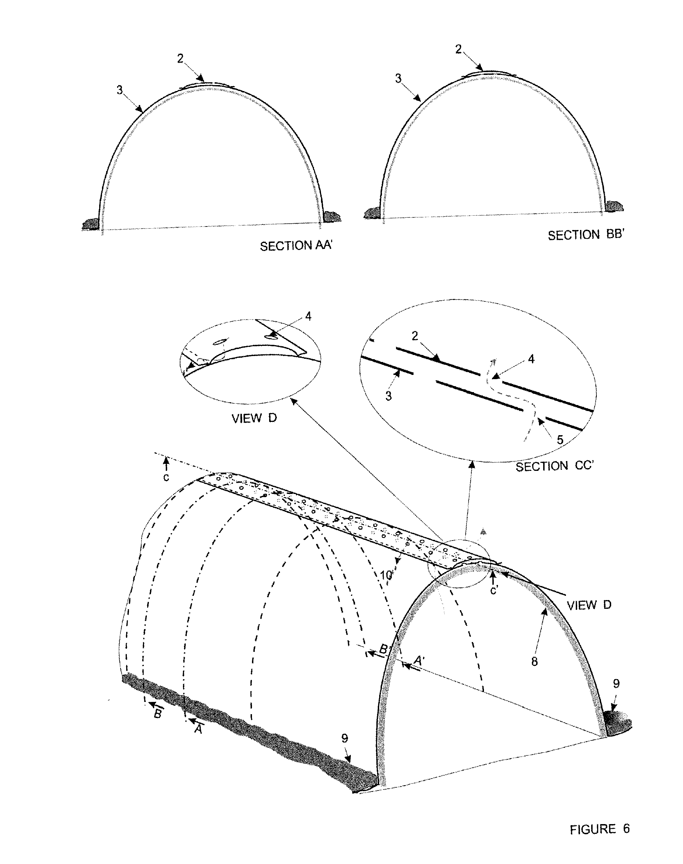

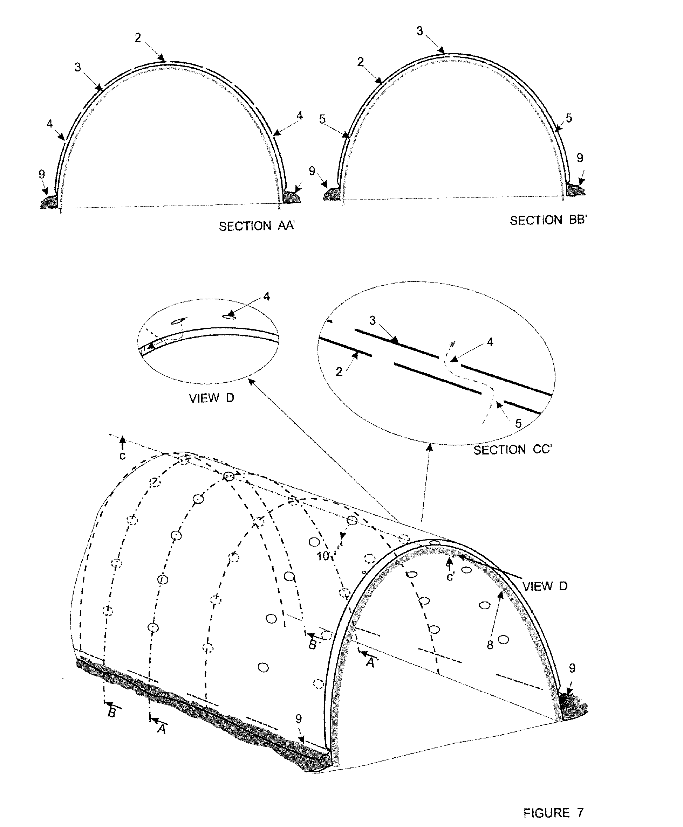

Both plastic films (top and bottom) are perforated with holes (4 and 5), preferably up to Φ100mm, and in such a way that none of the holes (4) in the top plastic film (2) coincide partly or entirely with any of the holes (5) in the bottom plastic film (3). Additionally, their topology in space must be such that when the double plastic film (1) is placed over the frame of the tunnel (8), none of the holes (4) in the top plastic film (2) are in the same transverse path (passage) as the holes (5) in the bottom plastic film (3). This is necessary so that any rainwater that may pass through a random hole in the top plastic film (2) (figures 6 and 7), will not - when flowing down according to the slope of the tunnel (8) - encounter any of the holes (5) in the bottom plastic film (3), thus flowing straight to the ground (9) between the two plastic films, without entering the covered space.

In this way we can ensure that there will be no flow of rainwater (10) into the covered space.

With regard to the ventilation function, it is a known fact that the elasticity of a plastic film is significantly affected by its temperature.

When its temperature rises, it expands, and the opposite happens when its temperature drops.

So when the temperature of the plastic rises as a result of the temperature increase in the covered space, the two sections of the double plastic films (1) (which are equal in length) will expand and thus "open" the space between them, forming a path for outgoing or incoming air.

The opposite will occur when the top (2) and bottom (3) plastic films of the double plastic film cool down. The two sections (2 and 3) will contract and stick to each other, and given that - owing to the topology - none of the holes (4) in the top plastic film (3) will coincide with any of the holes (5) in the bottom plastic film (2), the openings will close and ventilation will stop.

Below is a description of some methods for realising the invention.

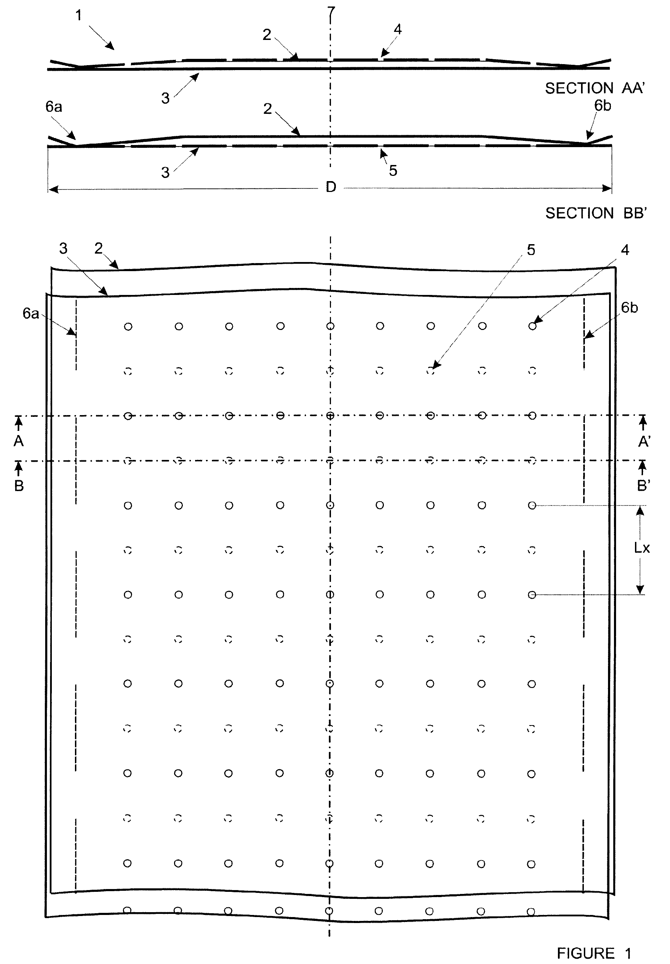

A plastic film (figure 1) is produced by applying the blown film extrusion process, and once it is flattened - from a circular 'balloon' with a perimeter of 2D - it is rolled up to create a lay-flat tube of film with a width of D. The two edges of the flattened film are cut in order to create two independent films of the same D width (which is equal to half of the perimeter of the initial film) and same thickness.

This process is applied if one wants the two plastic films to have the same composition and thickness, and/or on-line production.

Otherwise, the two plastic films (2 and 3) can derive from two different production processes so that they can have a different composition and thickness.

These two plastic films (2 and 3), which have the same D width and are precisely on top of each other, are perforated lengthwise - preferably along their central axis (7) - with one or more rows of repeated holes up to Φ100 mm in size (figure 1 presents 9 rows of repeated holes).

When winding them up, the two films are separated and passed through lines of different lengths, and are subsequently placed on top of each other so that their longitudinal axes coincide. In this way, the top plastic film (2) is shifted in relation to the bottom plastic film (3), and consequently the holes (4) of the top plastic film (2) are shifted in relation to the holes (5) of the bottom plastic film (3) along the length of the double plastic film (1). This shift does not need to cover a specific distance, but it must preferably be shorter than the distance (Lx) between two successive longitudinal holes and preferably half of the distance (Lx/2).

Thus, every hole (4) in the top plastic film (2) is situated between two successive holes (5) in the bottom plastic film (3), lengthwise, and preferably at the halfway point between the two holes (see figure 1 where the holes in the top plastic film are depicted as solid-line circles and the holes in the bottom plastic film are depicted as broken-line circles).

None of the holes in the top plastic film (2) coincide with any holes or even parts of any holes in the bottom plastic film (3).

Following the shift, the holes (5) in the bottom plastic film (3) will be covered by a section of the top plastic film (2), while the holes (4) in the top plastic film (2) will be covered by sections of the bottom plastic film (3).

Following the shift, the two superimposed plastic films are joined to each other by repeated lengthwise adhesions (6a and 6b) so as to demarcate their topology and consequently secure the relevant positions of the holes in the two plastic films, and eventually to create the double plastic film (1) that is usually rolled up.

When placing the double plastic film (1) over the semi-circular frame of the tunnel (8), whether low or high (greenhouse), the holes (4 with solid lines and 5 with broken lines) will be positioned in one or more rows (in 9 rows in figure 7) along its length, but never the one beneath the other.

When it rains, the rainwater (10) will pass though each hole (4) in the top plastic film (2) and - due to its slope - will flow to the side of the tunnel without encountering any holes (5) in the bottom plastic film (3), and will eventually reach the ground (9) without having passed through the greenhouse or low tunnel.

It can flow out of the plastic films and into the ground (9) through the gaps between the adhesions.

An alternative method for realising the invention would be to make the top plastic film (2) a strip of plastic film with the same or a different composition and thickness as the bottom film (3). The two films will have a different width but will be centred both crosswise and lengthwise, the one on top of the other (they will have the same longitudinal axis of symmetry -7-).

Based on one version of this method for realising the invention, which involves the attachment of a strip and not of a plastic film of the same width, the production could be on-line.

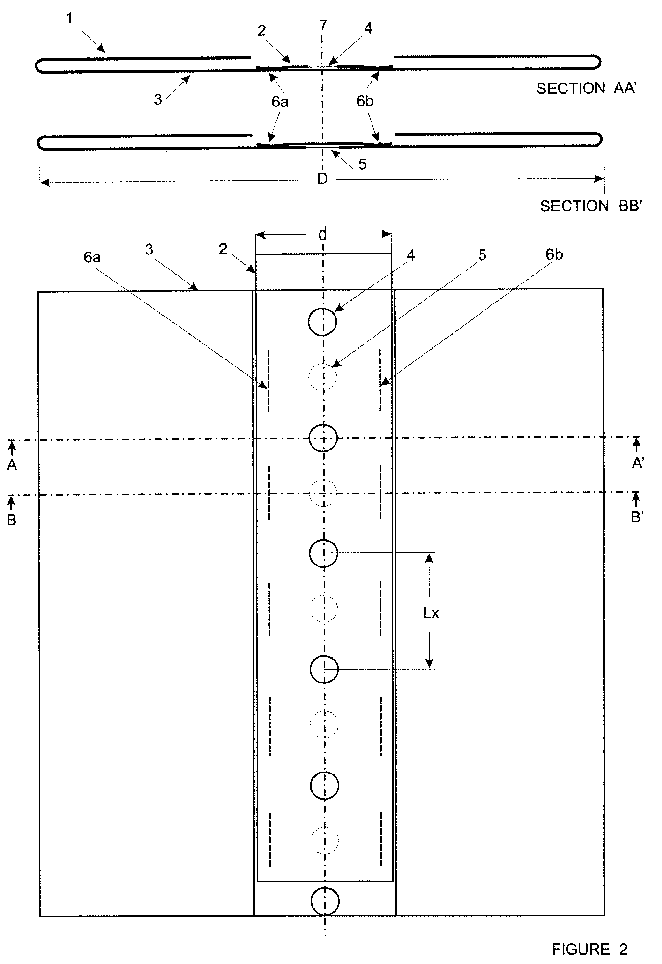

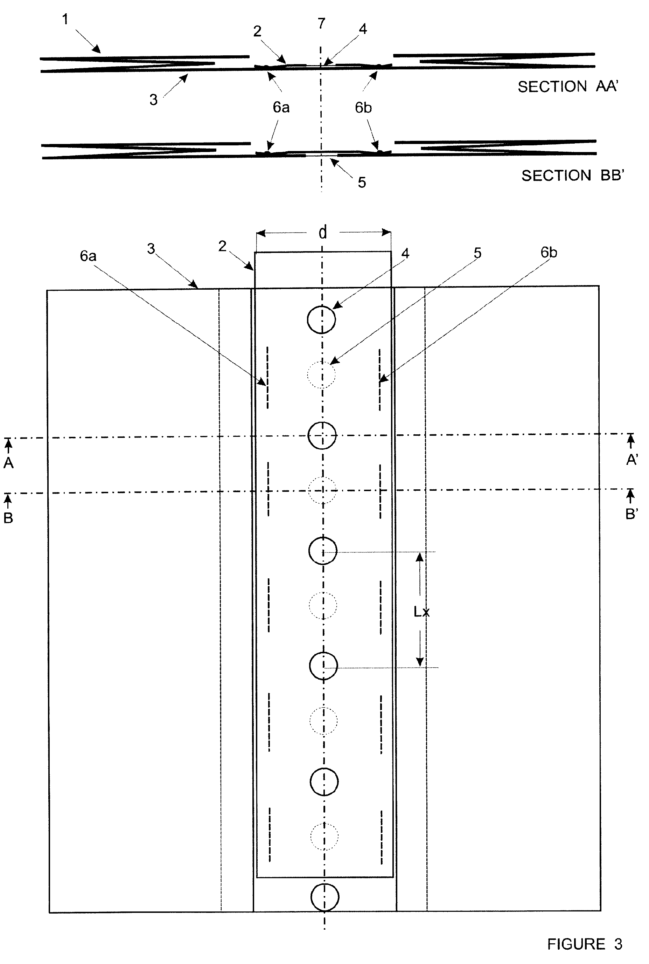

In an uncut plastic film folded in two (figure 2) or four, in the form of a gusset (figure 3) and with a perimeter of 2D, a row of repeated holes with a diameter of up to Φ100 mm is created at intervals of Lx along the length of its axis of symmetry (7).

Subsequently, a strip with a width of d is cut out of the film containing the top row of holes (4) in order to constitute the top plastic film (2). This strip follows a different longitudinal path and is preferably larger by half of the distance between the holes so that it can be shifted accordingly (by Lx/2) in relation to the bottom section of the plastic film (3).

The two sections are then coincided, while still being centred in relation to their longitudinal axis (7), and are joined by repeated adhesions (6a, 6b) along their length, in any form, but preferably linear adhesions.

Thus, the holes (4) in the strip that will constitute the top plastic film (2) are shifted by a length shorter than Lx in relation to the corresponding holes in the remaining bottom section of the initial film, which will constitute the bottom plastic film (3), so that every hole in the top plastic film (2) will be between two holes in the bottom plastic film (3), and preferably halfway between their longitudinal distance (Lx/2).

Here, too, the two films of the double plastic film can have a different composition and thickness resulting from two different production processes. However, they must be centred, the one on top of the other, along their entire length; and then they must be perforated and shifted lengthwise, before being joined as described above in order to demarcate their relevant positions.

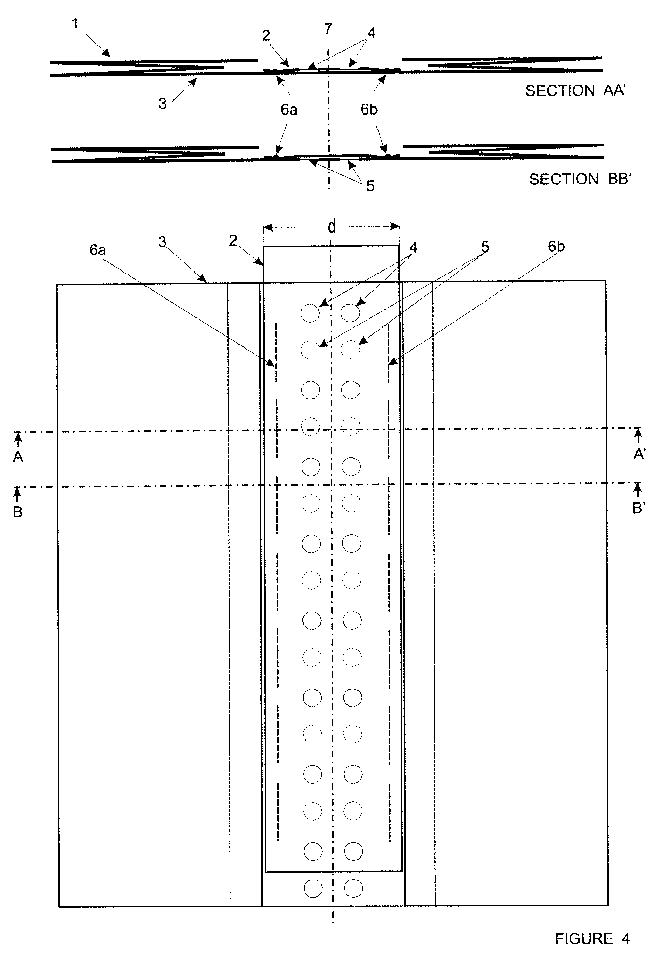

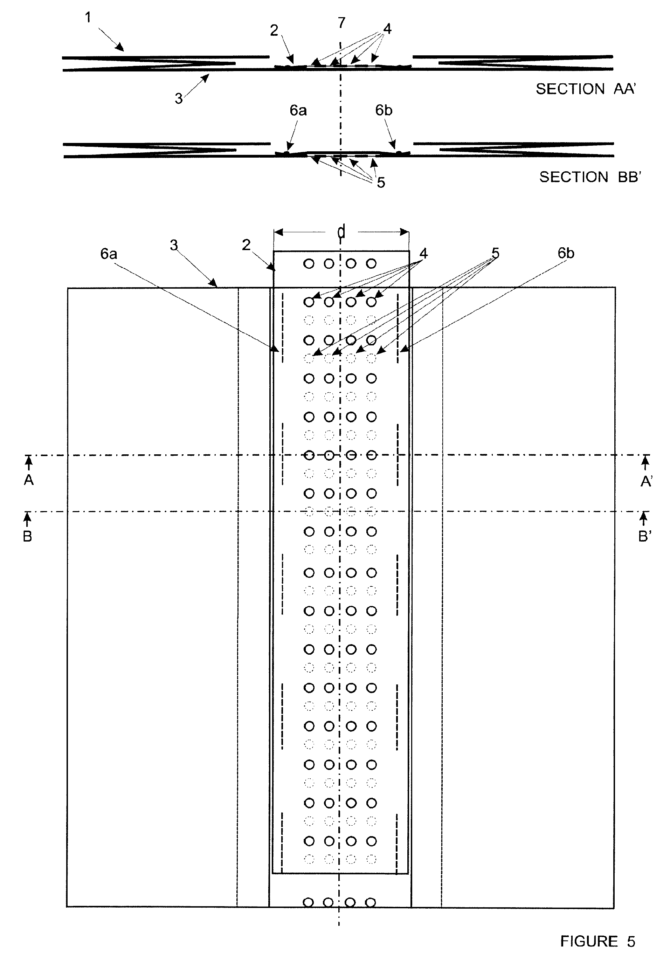

Lastly, there could be a second row of holes (figure 4) or even more rows (see figure 5, which presents four rows) along the length of the film, preferably symmetrically in relation to its central longitudinal axis of symmetry (7).

By using these types of plastic films, which are in fact entirely or partly double plastic films (1) that have been perforated with holes which, in turn, have been shifted lengthwise so that they do not coincide, one can ensure satisfactory ventilation depending on the requirements, without allowing rainwater (10) to flow into the covered space.

Furthermore, the existence of a double plastic film (1) on a crosswise section or across its entire width has an insulating effect, thus further improving its function as a thermal plastic film.

Lastly, if the double plastic film is manufactured with two films having a different composition and thickness, this may add special qualities to the final double plastic film (1) and help save as much money and material as possible.

So, for example, if the plastic film (1) consists of two plastic films of the same D width, the bottom plastic film (3) can be made of a thinner and less resistant material, while the top plastic film (2), which is exposed to the air of the external environment and the different weather conditions, can be made of material that is more resistant to wind load, hail and UV radiation.

## Claims

1. Double plastic film for covering agricultural crops (1) of any length and width, which is **characterised by** the fact that it consists of two sections of plastic film, the top plastic film (2) and the bottom plastic film (3), which are joined to each other by repeated and successive adhesions (6a, 6b), and which have ventilation holes (4 and 5) with a diameter of up to Φ100 mm recurring along the length of the plastic film and positioned in such a way that none of the holes (4) in the top plastic film (2) coincide fully or partially with any of the holes (5) in the bottom plastic film (3).

2. Double plastic film for covering agricultural crops in accordance with claim 1, which is **characterised by** the fact that the two films of which it consists have the same D width and are preferably both centred in relation to their longitudinal axis of symmetry (7) (figure 1).

3. Double plastic film for covering agricultural crops in accordance with claim 1, which is **characterised by** the fact that the top plastic film (2) is smaller in width than the bottom plastic film (3), and preferably both are longitudinally centred (they have a common axis of symmetry -7-)(figures 2, 3 and 4).

4. Double plastic film for covering agricultural crops in accordance with claim 1 and one of 2 or 3, which is **characterised by** the fact that the two plastic films have the same thickness and composition.

5. Double plastic film for covering agricultural crops in accordance with claim 1 and one of 2 or 3, which is **characterised by** the fact that the two plastic films have a different thickness and/or composition.

6. Double plastic film for covering agricultural crops in accordance with claim 1 and one of 2 or 3, which is **characterised by** the fact that both the top plastic film (2) and the bottom plastic film (3) have a longitudinal row of repeated holes, which have a common axis of symmetry (7) and have been shifted in relation to each other so that each hole (4) in the top plastic film (2) can be positioned between two holes (5) in the bottom plastic film and vice versa (figures 2 and 3).

7. Double plastic film for covering agricultural crops in accordance with claim 1 and one of 2 or 3, which is **characterised by** the fact that both the top plastic film (2) and the bottom plastic film (3) have two or more longitudinal rows of repeated holes, which have a common longitudinal axis of symmetry (7) and have been shifted in relation to each other so that each hole (4) in the top plastic film (2) can be positioned between two longitudinal holes (5) in the bottom plastic film (3) and vice versa (figures 1, 4 and 5).
